# EUROPEAN PATENT APPLICATION

(11) **EP 1 547 748 A1**
(43) Date of publication of application: **29.06.2005**
(21) Application number: 04026208.1
(22) Date of filing: 04.11.2004
(51) Int. Cl.: B29C 45/37, B29C 33/56, B29C 45/26

(54) **Optical disc mold having diamond-like carbonaceous layer (DLC) and a molding method using the same**

(30) Priority: 26.12.2003 JP 2003434128
(71) Applicant: TECHNOS CO., LTD.,, Yokohama-city Kanagawa-ken,223-0057 (JP)
(72) Inventor: Ishikawa, Makoto, Technos Co.Ltd,Yokohama Factory, Yokohama-city Kanagawa-ken 223-0057 (JP)
(74) Representative: Swindell & Pearson

(57) **Abstract**

In order to shorten the cycle time of the molding operation, the present invention provides a mold for molding optical discs wherein irregularity having a controlled surface roughness is formed on a stamper-holding surface (14) in a molding cavity (7) of a mold in such degree that said irregularity is not transferred to the stamper surface, and a diamond-like carbonaceous layer (15) is integrally formed on said surface. A method for molding optical discs comprising steps of mounting a stamper (1) having an information pattern surface onto a stamper holding surface (14) in a molding cavity (7) of a mold according to the present invention and injecting a molten resin material into the cavity (7).

## Description

### [Technical field]

The present invention relates to a mold for producing optical discs using a stamper (master molding plate) and a method of producing optical discs using the mold. In particular, the present invention relates to a mold for producing optical discs with shortened cycle time and a method of producing the optical discs using the mold.

### [Background of the invention]

### [Prior art]

Optical discs are generally produced using the injection molding method. A molding cavity is formed between opposing surfaces of a fixed mold half and a movable mold half and a stamper having an information pattern on a surface in the form of pits or other irregularity according to information is mounted on a holding surface of one of the fixed and movable mold halves, a molten resin is injected into the cavity, and the mold is cooled to solidify the resin so that optical discs having an information pattern transferred from the stamper are produced.

With such mold and stamper, it is necessary one hand to heat the mold and the stamper to or above a predetermined temperature so that every corner of the information pattern of the stamper surface is completely filled with an injected molten resin to transfer the precise information pattern to the resin and it is necessary on the other hand to cool the mold and stamper from outside so that the molded optical disc is quickly cooled and solidified. However, in order to raise the temperature of the cooled cavity surface and the stamper to or above the predetermined temperature it is required either to raise the temperature of the molten resin to be injected or to lengthen the contact period of time with the molten resin, resulting in problems of a time period for one injection molding (cycle time) being long and a productivity (shortening of the cycle time and number of injection shots per unit time) being low.

To solve this problem, various techniques have been proposed in which the stamper is heat-insulated by providing a heat insulating layer on the surface of the mold cavity where the stamper is held or supported, thereby shortening the cycle time.
For example, those techniques include: a technique in which a heat insulating layer having a low thermal conductivity, such as ceramic material, bismuth, polyamide or polyamide-imide, is fixedly attach to the back surface of a stamper or within a stamper, whereby heat is temporary stored at the time of filling of a molten resin to the cavity so as to increase the transfer efficiency, while the cooling is quickly done by a cooled metallic mold so as to raise the productivity (see JP 2002-361689 A); and a. technique in which a heat insulating coating, such as polyimide, polyetherimide or siloxane-modified polyetherimide, is applied on the back surface (the surface contacting the mold) of the stamper (insert) to shorten the cycle time (see JP 2002-513691 A)

However, although the stamper having on its back surface a heat insulating layer such as ceramics, bismuth, polyimide, polyamide-imide, or the like can reduce the cycle time for molding, it has a drawback that the friction between the stamper and the mold is increased, whereby the life of use of the stamper and the stamper-holding surface of the mold is shortened, and thus the number of shots before the stamper has to be exchanged and the number of shots before the mold has to be exchanged are significantly shortened.
Further, in case the stamper and the heat insulating layer is integrally formed, there is a problem that a strain is developed in the stamper due to the difference in thermal expansion coefficient between the stamper and the stamper-holding surface of the stamper, hindering a proper molding operation.
[Patent document 1] JP 2002-361689 A
[Patent document 2] JP 2002-513691 A

### [Disclosure of the invention]

### [Problem to be solved by the invention]

The stamper having on its back surface a heat insulating layer disclosed in the prior arts mentioned above has a drawback that the friction between the insulating layer of the stamper and the mold is increased, whereby the life of use of the stamper and the stamper-holding surface of the mold is shortened, and thus the number of shots before the stamper has to be exchanged and the number of shots before the mold has to be exchanged are significantly shortened.
That is, although a thick heat insulating layer of 20 - 250 µ m is present between the stamper and the stamper-holding surface of the mold to improve the heat insulation of the stamper or retardation of cooling of the stamper, the large friction between the stamper-holding surface of the mold and the heat insulating layer formed on the back surface of the stamper generates scratches on the coherent surfaces which deform the transfer surface (information bearing surface) of the stamper, and the deformation makes a precise transfer of information impossible, leading to significantly shortening the life of use of the stamper. There has not been any trial in the art to improve the durability of the stamper having a heat insulating layer.
Further, where the stamper and the heat insulating layer is integrally formed, there is a problem that a strain is developed in the stamper due to the difference in thermal expansion coefficient between the stamper and the stamper·holding surface of the stamper, hindering a proper molding operation.
Therefore, the object of the present invention is to solve the above-mentioned problems, by improving durability of the stamper and the mold without using such a heat insulating layer, and to provide an optical disc mold with remarkably shortened cycle time and a molding method using the same.

### [Means for solving the problem]

The present invention solves the problem by providing a mold for molding optical discs wherein irregularity having a controlled surface roughness is formed on a stamper-holding surface in a molding cavity of the mold in such a degree that the irregularity is not transferred to the stamper surface, and a diamond-like carbonaceous layer integrally is formed on the surface.
Specifically, the surface roughness Ra of the stamper-holding surface is in the range of from 50 to 10,000 Å and P-V (peak-to-valley) is in the range of from 1,000 Å to 100,000Å, preferably Ra is from 500 to 1,500 Å and P-V is from 5,000 Å to 20,000Å.

The composition of the diamond-like carbonaceous layer to be used in the present invention is preferably represented by the following formula:

CHₐO_{b}N_{c}F_{d}BₑP_{f}

where a = 0.05 - 0.7, b = 0 - 1, c = 0 - 1, d = 0 - 1, e = 0 - 1 and f = 0 - 1, in terms of atomic ratio.

The present invention also provides a method for molding optical discs comprising steps of mounting a stamper having an information pattern surface onto the above mentioned stamper holding surface in a molding cavity of a mold, and injecting a molten resin material into the cavity.

### [Effect of the invention]

In the present invention, upon forming a diamond-like carbonaceous layer on the stamper-holding surface which forms a part of the molding cavity surface of the optical disc mold, a predetermined surface roughness is introduced to the stamper-holding surface, thereby forming irregularity on the surface of the diamond-like carbonaceous layer. By introducing the irregularity, an air layer is formed between the back side of the stamper and the diamond-like carbonaceous layer, which functions as a heat insulator between the back side of the stamper and the stamper-holding surface, enhancing the heat-retaining property of the stamper, thereby shortening the cycle time for molding optical discs.
The present invention attains the same insulation level as that of the conventional insulation layer, with using an air layer but without using a special insulation layer on the stamper-holding surface of the mold as in the conventional method. In addition, with the use of the diamond-like carbonaceous layer, durability is remarkably enhanced as compared with the conventional insulation layers. The life of the stamper and the life of the mold become remarkably long, which are equivalent to those of the conventional optical disc mold in which diamond-like carbonaceous layer is introduced on the stamper-holding surface.

### [Brief description of the drawing]

### [Fig. 1]

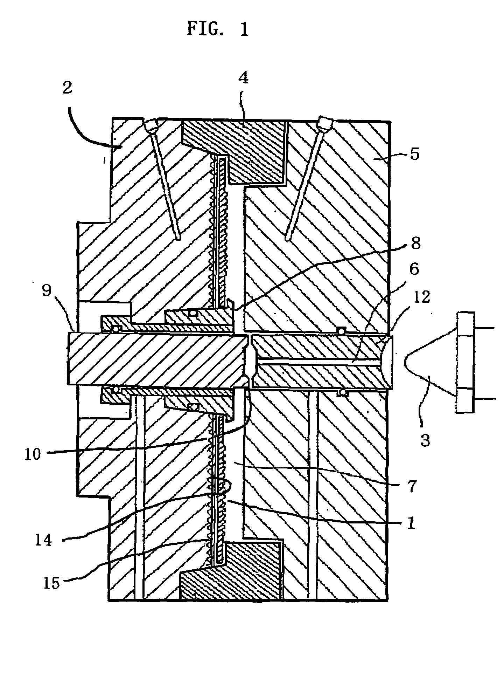

Fig. 1 shows an embodiment of the injection molding layer for practicing injection molding in the present invention.

### [Best mode for carrying out the invention]

The present invention is characterized in that, upon forming a diamond-like carbonaceous layer on the stamper-holding surface which forms a part of the molding cavity surface of the optical disc mold, predetermined surface roughness is introduced to the stamper-holding surface, thereby forming irregularity on the surface of the diamond-like carbonaceous layer.

With respect to the diamond-like carbon (DLC) layer, reference can be made to, for example, Japanese Patent Application Kokai Nos. 62-145646 and 62-145647, and New Diamond Forum, Vol. 4 No. 4 (issued in October 25, 1988). As is described in the above-mentioned document (New Diamond Forum), Raman spectroscopic analysis showed that the DLC layer has a broad peak of Raman scattering spectrum at 1400 - 1700 cm-1, which is different from diamond having a narrow peak at 1333 cm-1, and graphite having a narrow peak at 1581 cm-1, which in turn suggests that the DLC layer has distinctively different structure from the others. The broad peak observed in Raman spectroscopic analysis spectrum of the DLC layer is subject to change, due to the change in the elements included, other than carbon and hydrogen. The DLC layer is an amorphous thin layer mainly composed of carbon atoms and hydrogen atoms, which carbon atoms are randomly bonded via sp² and sp³ bonds.

The surface roughness of the stamper-holding surface should be controlled in such manner that it does not affect the pattern to be transferred formed on the surface of the stamper. The surface roughness Ra of the stamper-holding surface of the molding cavity that meets the above demand is in the range of from 50 to 10,000 Å, preferably from 500 to 1,500 Å, and P-V (peak-to-valley) is in the range of from 1,000 Å to 100,000Å, preferably from 5,000 Å to 20,000Å. In Examples of the present invention, approximately 1,000 A was selected as Ra, and approximately 10,000 Å was selected as P-V
The above-mentioned surface roughness Ra and P-V were measured according to the definition by JIS.

As the materials for the mold to be used in the present invention, mold steel can be used, and examples include stainless sintered alloy, such as ELMAX (product name) and STAVAX (product name) manufactured by Woodyholm.

In the present invention, between the diamond-like carbonaceous layer and the stamper-holding surface of the mold, a coherent layer having a thickness of approximately 0.01 - 3 µ m can be formed. For the coherent layer, reference can be made to, for example, Japanese Patent Application Kokai No. 4-341558 which describes an Mo film, Japanese Patent Application Kokai No. 5-142875 which describes an amorphous film of carbon and silicon, Japanese Patent Application Kokai No. 2000-177046 which describes a silicon carbide film and a metal film made of silicide of at least one member selected from V, Nb, Ta, Cr, Mo, W, Ti and Zr, Japanese Patent Application Kokai No. 2000-178736 which describes a membrane made of silicide of at least one member selected from V, Nb, Ta, Cr, Mo, W, Ti and Zr, Japanese Patent Application Kokai No. 2000-178737 which describes a laminated film consisting of a metal film mainly composed of 5A metal of the periodic table and an Si film mainly composed of Si, and Japanese Patent Application Kokai No. 2000-178738 which describes an amorphous diamond-like carbonaceous layer having a gradient of oxygen contained.

The composition of the diamond-like carbonaceous layer to be used in the present invention mainly comprises carbon and hydrogen, and may include other additional components. The composition is preferably represented by the following formula:

CRₐ O_{b}N_{c}F_{d}BₑP_{f}

where a = 0.05 - 0.7, b = 0 - 1, c = 0 - 1, d = 0 - 1, e = 0 - 1 and f =0 - 1, in terms of atomic ratio.
The thickness of the diamond-like carbonaceous layer is preferably 0.01 - 10 µm, more preferably 0.03 - 3.0 µm.

Fig. 1 shows an embodiment of the injection molding device to be used for production of optical discs, where molten resin is injected into a mold cavity formed between opposing surfaces of the movable mold half holding a stamper (master molding plate) and a fixed mold half, pressure is applied and the resin is cooled, thereby obtaining a molded article with the surface pattern of the stamper transferred onto the molded article. The mold comprises a movable mold half 2 and a fixed mold half 5. When a movable mold is closed, a molding cavity 7 is formed between the halves. With respect to the movable mold 2, the irregularity-introduced surface on the side of the cavity 7 holds a metal stamper 1 in the form of sheet, such as that of Ni. The outer portion of the stamper is fixed with the outer ring 4 and/or the inner portion is fixed with the inner ring 8. The outer ring 4 also serves as a circumference wall of the cavity 7. Fig. 1 shows the mold in closed position, and the cavity 7 is formed. With this position, resin is injected from the feed inlet 3 through a gate 6 of the gate member 12 into the cavity 7 under a predetermined molding pressure, thereby conducting molding, with the information pattern (irregularity) on the surface of the stamper 1 being transferred to the resin. During the molding or after the molding, the tip of the gate cutting member 9 sticks in resin, and the center portion of the optical disc is cut out with the gate cutting portion 10, so as to form a central hole. The movable mold and the fixed mold have a cooling path system (not shown), in which the cooling water circulates to cool the mold portion surrounding the cavity.

According to the present invention, the above-mentioned surface 14 having the predetermined average roughness Ra and P-V is formed on the holding surface of the stamper-holding movable mold 2 on the side of the cavity, using arbitrary techniques known in the art, such as shot peening and scratch-brush finish, and on the surface thereof, a diamond-like carbonaceous layer 15 is integrally formed directly or via a metal film. With this structure in which the surface of the diamond-like carbonaceous layer 15 has irregularity that follows the irregularity of the base surface, even though the stamper 1 repeatedly experiences thermal expansion and cooling shrinkage during molding, the friction with the diamond-like carbonaceous layer is low, and the friction does not generate scratch on the back surface of the stamper and the surface of the mold. Therefore, the quality of the stamper and the mold can be maintained for a long period. At the same time, an air layer is formed between the diamond-like carbonaceous layer and the stamper 1, providing insulation. Due to this heat-insulating effect, the cycle time for molding can be remarkably shortened, and finally, the service life of the mold can be remarkably extended.

### (Formation of the diamond-like carbonaceous layer)

A diamond-like carbonaceous layer (hereinbelow, simply referred to as "DLC layer") can be formed by, for example, plasma CVD method, ionization deposition method and ECR plasma CVD method, and in addition, sputtering method can be used.
With respect to the plasma CVD method used for forming the DLC layer, reference can be made to, for example, Japanese Patent Application Kokai No. 4-41672. The plasma to be used in plasma CVD method may be either direct current or alternating current. Alternating current can range from a few hertz to microwave. In addition, ECR plasma described in, for example, "Diamond thin-film technique" (published by Technology Center) can be used. Moreover, a bias voltage can be applied.

When the DLC layer is formed using plasma CVD method, the material gas is preferably selected from the following group of compounds.
Examples of the compounds containing C and H include hydrocarbons, such as methane, ethane, propane, butane, pentane, hexane, ethylene and propylene.
Examples of the compounds containing C+H+O include CH₃OH, C₂H₅OH, HCHO and CH₃COCH₃.
Example of the compounds containing C+H+N include ammonium cyanide, hydrogen cyanide, monomethylamine, dimethylamine, allylamine, aniline, diethylamine, acetonitrile, azoisobutane, diallylamine, ethylamine, MMH, DMH, triallylamine, trimethylamine, triethylamine and triphenylamine.

In addition, the above-mentioned compounds can be used in combination, or used together with O sources, ON sources, N sources, H sources, F sources, B sources, P sources and the like.

The flow rate of the above-mentioned material gas can be selected depending on the types of the material gas. In general, it is preferred that the operating pressure be 1 - 200 Pa and the input power be 10 W - 5 kW.

In the present invention, ionization deposition method and the like can be used for forming the DLC layer. With respect to ionization deposition method, reference can be made to, for example, Japanese Patent Application Kokai No. 59-174508, Japanese Patent Application Kokai No. 2-22012 and Japanese Patent Application Kokai No.10-202668. It should be noted that the methods and the devices are not limited to the disclosed ones, and other types of ionization deposition technique can be applied, if it is possible to accelerate the material ionization gas.

In ionization deposition method, the inside of the vacuum container is kept under the high-vacuum of approximately 10⁻⁴ Pa. This vacuum container is equipped with a filament therein which generates thermoelectrons when heated by the alternating-current power supply. This filament is sandwiched by an electrode couple, and voltage Vd is applied to the filament. In addition, an electromagnetic coil which generates a magnetic field for capturing ionized gas is placed in such manner that it surrounds the filament and the electrode couple. The material gas collides with the thermoelectrons from the filament, and generates positive thermolytic ions and electrons. This positive ion is accelerated by negative potential Va applied to the grid. By adjusting Vd, Va and the magnetic field of the coil, the composition and the quality of the layer can be altered. In addition, a bias voltage can be applied.

When the DLC layer is formed by ionization deposition method, the same material gas as in the case of plasma CVD method can be used. The flow rate of the material gas can be selected depending on the type of the gas. In general, the operating pressure is preferably 1 - 70 Pa.

It is also possible to form the DLC layer by sputtering method. In this case, gases such as O₂, N₂, NH₃, CH₄ and H₂ as reactive gas can be introduced, in addition to sputter gas, such as Ar and Kr. In addition, C may be used as a target, or mixed target containing C, N, O and the like or two or more targets may be used. Polymer can be used as a target. With the use of such targets, a radiofrequency power, an alternating-current power or a direct current power is applied, thereby sputtering the target; and the sputter is accumulated on the substrate, thereby forming a DLC layer. The radiofrequency sputter power is generally 10 W - 5 kW. In general, the operating pressure is preferably 10⁻³ - 0.1 Pa.

With the use of such targets, the radiofrequency power is applied, thereby sputtering the target, and the sputter is accumulated on the stamper-holding surface of the mold, thereby forming a DLC layer. In this case also, a negative bias voltage is used for applying bias to the mold. The bias voltage is preferably direct current. Alternatively, self-bias can be applied instead of the bias voltage. The bias voltage is preferably -10 ∼ -2000 V, more preferably -50 ∼ -1000 V. The radiofrequency sputter power is generally 10 W - 5 kW. In general, the operating pressure is preferably 0.0013 - 0.13 Pa.

Prior to the formation of the diamond-like carbonaceous layer, the stamper-holding surface of the mold should be subjected to mirror polishing, and then irregularity should be introduced to the stamper-holding surface.

### (formation of a coherent layer)

In the present invention, the coherent layer may be provided between the irregularity-introduced mold surface and the diamond-like carbonaceous layer. This layer can be obtained from a proper material by substantially the same method as the above-mentioned method for forming DLC layer.

### [Examples]

In the following Examples and Comparative Examples, scratch-brush finish and shot peening (forming irregularity by impacting the surface of the mold with shot balls having the same hardness as that of the mold) were applied.

### Example 1

The cavity surface of the steel mold holding the stamper was subjected to mirror polishing, and the surface was subjected to scratch-brush finish in such a degree that the surface roughness Ra became approximately 1,000 Å and P·V approximately 10,000 A. On the resultant surface, an SiC layer having a thickness of 0.5 mm was formed by flame spraying, and a diamond-like carbonaceous layer having a thickness of 1.5 µ m was formed thereon. It should be noted that the diamond-like carbonaceous layer was formed by a self-bias RF plasma CVD method, under the following conditions: material gas: C₂H₄ (0.017 Pa · m³ · s⁻¹), electric source: RF, operating pressure: 66.5 Pa, input power: 500 W, layer-forming rate: 100 nm/min. The composition of the layer was CH_{0.21}, and the resultant carbon layer was a diamond-like carbonaceous layer.

### Example 2

The cavity surface of the steel mold holding the stamper was subjected to mirror polishing, and the surface was subjected to shot peening in such manner that the surface roughness Ra became approximately 1,000 Å and P-V approximately 10,000 Å. On the resultant surface, a diamond-like carbonaceous layer having a thickness of 1.5 µ m was formed. It should be noted that the diamond-like carbonaceous layer was formed by substantially the same procedure as in Example 1.

### Comparative Example 1

The cavity surface of the mold holding the stamper was subjected to mirror polishing, and then to scratch-brush finish in such manner that the surface roughness Ra became approximately 1,000 Å and P-V about 10,000 Å. The resultant mold was used in this Comparative Example.

### Comparative Example 2

The cavity surface of the mold holding the stamper was subjected to mirror polishing, and then to shot peening in such manner that the surface roughness Ra became approximately 1,000 Å and P-V about 10,000 Å. The resultant mold was used in this Comparative Example.

### Comparative Example 3

A mold coated with a diamond-like carbonaceous layer was prepared by substantially the same procedure as in Example 1, except that the scratch-brush finish was not conducted.

In each of the above-mentioned Examples and Comparative Examples, injection molding was conducted for molding the optical discs, using a mold having the predetermined layers.
The results are shown in Table 1. In Table 1, "stamper life" is the number of shots that one stamper can be used without causing any poor molding performance; and "mold life" is the number of shots before one stamper-holding surface of one mold has to be exchanged.

**[Table 1]**

| | | Stamper life (unit: ten thousand shots) | Mold life (unit: ten thousand shots) | DVD-R cycle time (second) |
|---|---|---|---|---|
| Comparative Example 1 | scratch-brush finish | 1.5 | 3 | 4.0 |
| Comparative Example 2 | shot peening | 1.3 | 2.8 | 3.8 |
| Comparative Example 3 | mirror polishing + DLC | 40 | 208 | 6.2 |
| Example 1 | scratch-brush finish + DLC | 42 | 212 | 3.8 |
| Example 2 | shot peening + DLC | 40 | 215 | 3.7 |

As is apparent from the results shown in Table 1, without using the conventional insulating layer but with introducing irregularity having controlled surface roughness to the stamper-holding surface of the mold in such degree that the irregularity does not affect the transfer performance of the stamper, the stamper life in the present invention was remarkably improved, and the mold life in the present invention was remarkably enhanced, while the cycle time was maintained about the same as compared with the conventional mold having an insulating layer. Moreover; in the present invention, it became possible to remarkably shorten the cycle time for molding as compared with the conventional mold having only a diamond-like carbonaceous layer.

## Claims

1. A mold for molding optical discs wherein irregularity having a controlled surface roughness is formed on a stamper-holding surface in a molding cavity of a mold in such degree that said irregularity is not transferred to the stamper surface, and a diamond-like carbonaceous layer is integrally formed on said surface.

2. A mold for molding optical discs according to claim 1, wherein the surface roughness Ra of said stamper-holding surface in the molding cavity of the mold is in the range of from 50 to 10,000 Å and P-V is in the range of from 1,000 Å to 100,000 Å.

3. A mold for molding optical discs according to Claim 2, wherein the surface roughness Ra of said stamper-holding surface in the molding cavity of the mold is in the range of from 500 to 1,500 Å and P-V is in the range of from 5,000 Å to 20,000 Å.

4. A mold for molding optical discs according to any one of claims 1 to 3, wherein the diamond-like carbonaceous layer has a composition represented by the following formula:
CHₐO_{b}N_{c}F_{d}BₑP_{f}
(where a = 0.05 - 0.7, b=0-1,c=0-1,d=0-1,e=0-1 1 and f = 0 - 1, in terms of atomic ratio).

5. A method of molding optical discs comprising steps of mounting a stamper having an information pattern surface onto a stamper holding surface in a molding cavity of a mold according to any one of claims 1 - 4, and injecting a molten resin material into the cavity.

6. A mold for molding optical discs substantially as hereinbefore described with reference to the accompanying drawing.

7. A method for molding optical discs substantially as hereinbefore described with reference to the accompanying drawing.

8. Any novel subject matter or combination including novel subject matter disclosed herein, whether or not within the scope of or relating to the same invention as any of the preceding claims.
